(19) Europäisches Patentamt
European Patent Office
Office européen des brevets

(11) **EP 1 566 567 B1**

(12) **EUROPEAN PATENT SPECIFICATION**

(45) Date of publication and mention
of the grant of the patent:
**27.03.2013 Bulletin 2013/13**

(21) Application number: **03772789.8**

(22) Date of filing: **14.11.2003**

(51) Int Cl.:
***F16G 5/16*** (2006.01)

(86) International application number:
**PCT/JP2003/014541**

(87) International publication number:
**WO 2004/048804 (10.06.2004 Gazette 2004/24)**

(54) **METALLIC BELT FOR STEPLESS SPEED CHANGER**

METALLRIEMEN FÜR STUFENLOSEN DREHZAHLÄNDERER

COURROIE METALLIQUE POUR SELECTEUR DE VITESSE SANS FIN

(84) Designated Contracting States:
**DE GB NL**

(30) Priority: **28.11.2002 JP 2002346469**

(43) Date of publication of application:
**24.08.2005 Bulletin 2005/34**

(73) Proprietor: **HONDA MOTOR CO., LTD.**
**Tokyo 107-8556 (JP)**

(72) Inventors:
• **KANEHARA, Shigeru**
**c(o K. K. Honda Gijutsu Kenkyusho**
**Wako-shi,**
**Saitama 351-0193 (JP)**
• **SAITOU, Toshihiro**
**c/o K. K. Honda Gijutsu Kenkyusho**
**Wako-shi,**
**Saitama 351-0193 (JP)**

• **YAGASAKI, Toru**
**c/o K. K. Honda Gijutsu Kenkyusho**
**Wako-shi,**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
EP-A- 1 179 690      EP-A- 1 267 091
EP-A1- 1 111 271      JP-A- 58 124 847
JP-A- 2001 317 594      JP-Y2- 2 000 513
US-A- 4 533 342      US-A- 4 619 634

• PATENT ABSTRACTS OF JAPAN vol. 2000, no.
13, 5 February 2001 (2001-02-05) -& JP 2000
297848 A (NISSAN MOTOR CO LTD), 24 October
2000 (2000-10-24)

EP 1 566 567 B1

## Description

### FIELD OF THE INVENTION

The present invention relates to a metal belt for a continuously variable transmission, which comprises a metal ring assembly comprising a plurality of endless metal rings laminated one on another, and a large number of metal elements each having a saddle face formed by crowning in a ring slot into which the metal ring assembly is fitted, the metal belt being wound around a driving pulley and a driven pulley to transmit a driving force.

### BACKGROUND ART

There is such a type of a metal belt for a continuously variable transmission, which is known from the following patent documents JP 2000 513 Y2 09, JP-A-2000-297848 and JP-A-2001-214956, and in which a metal ring assembly supported on a saddle face of a metal element is centered by crowning the saddle face.

In the metal belt described in JP 2000 513 Y2 09 on which the preamble of enclosed claim 1 is based, a peak point of the crowning is offset outwards (toward a pulley V-face) relative to a widthwise central portion of the saddle face of the metal element, and an inner end of the metal ring assembly is prevented from interfering with a neck of the metal element, resulting in a degradation in durability. There, the width of the metal ring assembly is smaller than the width of the saddle face.

In the metal belt described in JP-A-2000-297848, a decrease in maximum tensile stress on an outer peripheral surface of the metal ring is provided by defining a ratio R2/R1 of a radius R2 of curvature of the metal ring assembly to a radius R1 of curvature of the saddle face of the metal element in a predetermined range.

In the metal belt described in JP-A-2001-214956, a local stress is prevented from being generated at a widthwise end of the metal ring by setting a radius of curvature of the saddle face of the metal element represented by R1 and a radius of curvature of the metal ring assembly represented by R2, so that the following expression is established:

$$(1/R1) - (1/R2) > -5$$

It should be noted here that in the metal belt described in JP 2000 513 Y2 09, the metal ring assembly is centered by only the crowning of the saddle face and hence, it is difficult to sufficiently stabilize the widthwise behavior of the metal ring assembly. If the metal ring assembly is moved in a widthwise direction for any reason, there is a possibility that the metal ring assembly may interfere with the neck of the metal element, resulting in a degradation in durability. In addition, the offset amount is not limited and hence, it is feared that the end of the metal ring assembly closer to the pulley V-face may be worn due to the very strong interference with the pulley V-face.

In the metal belt described in JP-A-2000-297848, a point to which attention is paid for defining the radius of curvature of the saddle face and the radius of curvature of the metal ring assembly is a maximum tensile stress on an outer peripheral surface of the metal ring. However, it is not obvious whether or not the tensile stress on and the radius of curvature of the metal ring assembly, which are conditions for determining a suitable region by an experiment, are appropriate values, respectively, and moreover, the fracture of the metal ring assembly occurs from the side of the inner peripheral surface in most cases. Thus, it is unsuitable that attention is paid to the maximum tensile stress on the outer peripheral surface of the metal ring assembly.

In the metal belt described in JP-A-2001-214956, a decrease in local stress at the widthwise end of the metal ring is provided by defining the relationship between the curvature of the saddle face and the curvature of the metal ring assembly, but numerical values grounded on the definition of a suitable range are not described at all.

### DISCLOSURE OF THE INVENTION

The present invention has been accomplished with the above-described circumstances in view, and it is an object of the present invention to prevent the widthwise inner end of the metal ring assembly from being brought into contact with the neck of the metal element to result in a degradation in durability.

To achieve the above object, according to a first aspect and feature of the present invention, there is proposed a metal belt for a continuously variable transmission, which comprises a metal ring assembly comprising a plurality of endless metal rings laminated one on another, and a large number of metal elements each having a saddle face formed by a crowning in a ring slot into which said metal ring assembly is fitted, said metal belt being wound around a driving pulley and a driven pulley to transmit a driving force, wherein the position of a peak point of said crowning is offset outwards in a widthwise direction from a widthwise central position on the saddle face, characterized in that the width of the metal ring assembly is longer than the width of the saddle face; and that said offset amount is equal to or smaller than half of a value provided by the subtraction of the width of the saddle face from the width of the metal ring assembly, such that a widthwise outer end of the metal ring assembly is pushed lightly against a pulley V-face.

With the above arrangement, the widthwise outer end of the metal ring assembly is put into abutment against the pulley V-face by offsetting the position of the peak point of the crowning of the saddle face of the metal element outwards in the widthwise direction from the widthwise central position on the saddle face. Therefore, it is possible to position the metal ring assembly in the widthwise direction by the pulley V-face to stabilize the behavior thereof, and it is possible to prevent the widthwise inner end of the metal ring assembly from being brought into contact with a neck of the metal element. The pulley V-face is smooth as compared with the neck of the metal element, leading to inexistence of a difference in level and hence, it is possible to enhance the durability of the metal ring assembly. In addition, since the position of the peak point of the crowning is offset outwards in the widthwise direction, the surface pressure and the stress on the metal ring assembly cannot be increased to exert an adverse influence to the durability of the metal ring assembly.

In accordance with the invention, the offset amount is set at the value equal to or smaller than half of the value provided by the subtraction of the width of the saddle face from the width of the metal ring assembly. Therefore, it is possible not only to reliably prevent the wear of the end of the metal ring assembly, but also to decrease the stress of contact with the pulley V-face and further to ensure the durability of the metal ring assembly.

Preferably, the value of the ratio a radius of curvature of the crowning of the saddle face of the metal element to a radius of curvature of the crowing of the metal ring assembly in a free state is in a range of 0.5 to 1.0.

With the above arrangement, it is possible to reliably prevent the fracture due to the wearing of the inner peripheral surface of the innermost metal ring.

BRIEF DESCRIPTION OF THE DRAWINGS

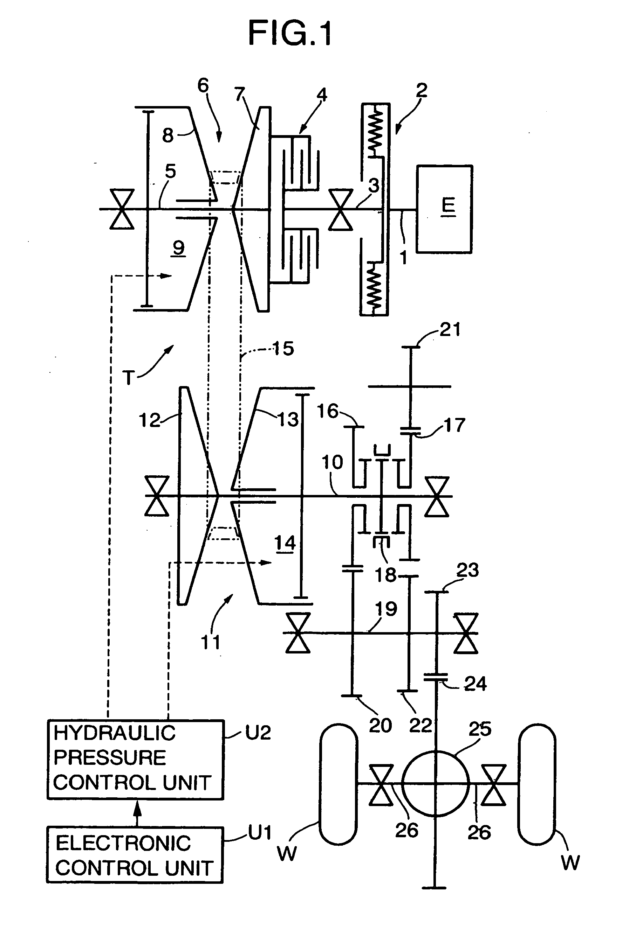

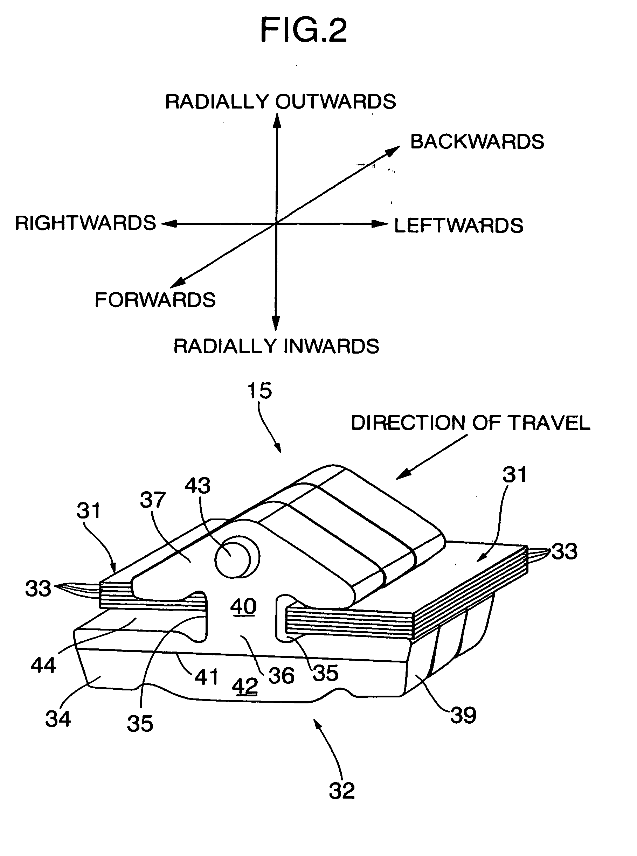

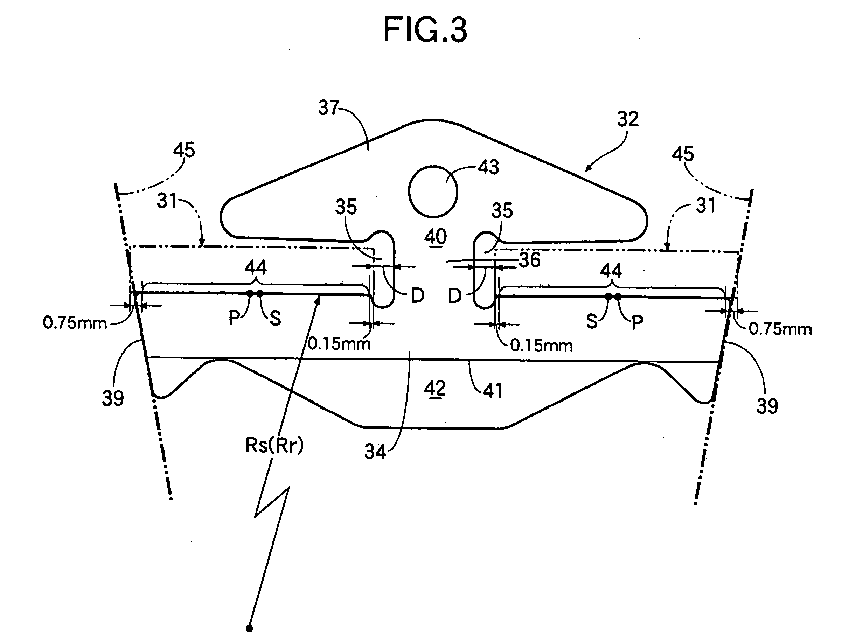

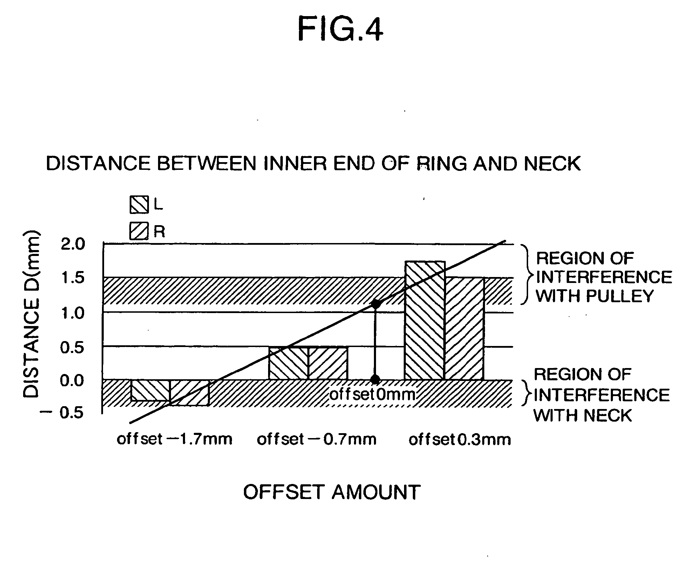

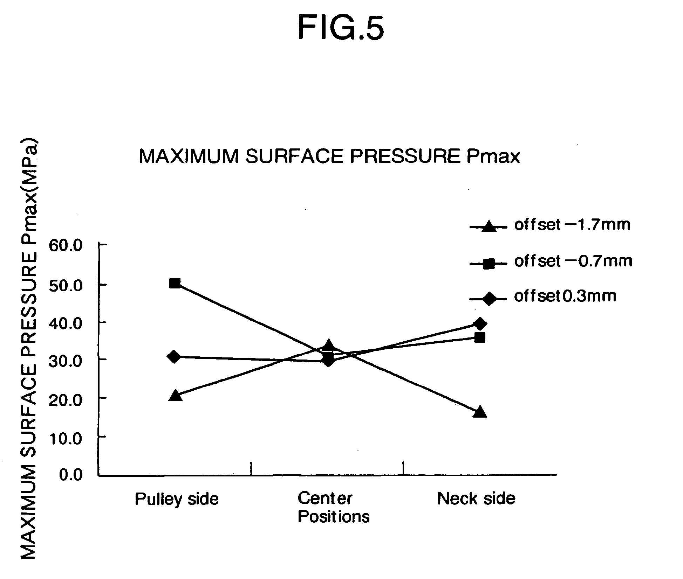

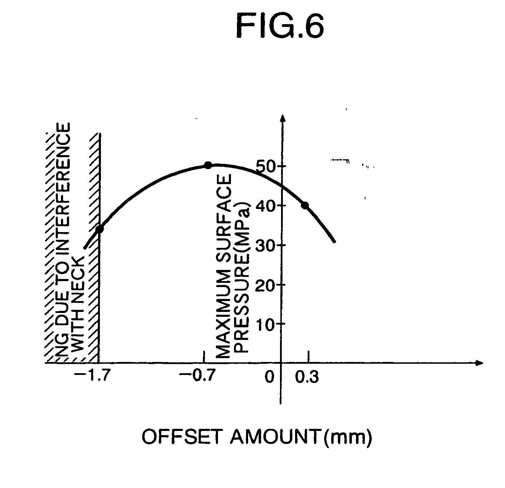

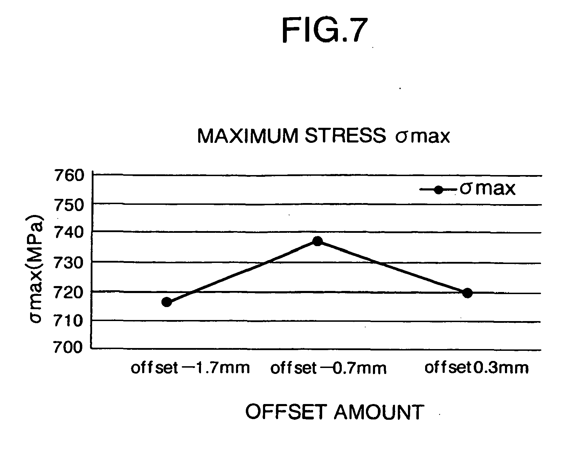

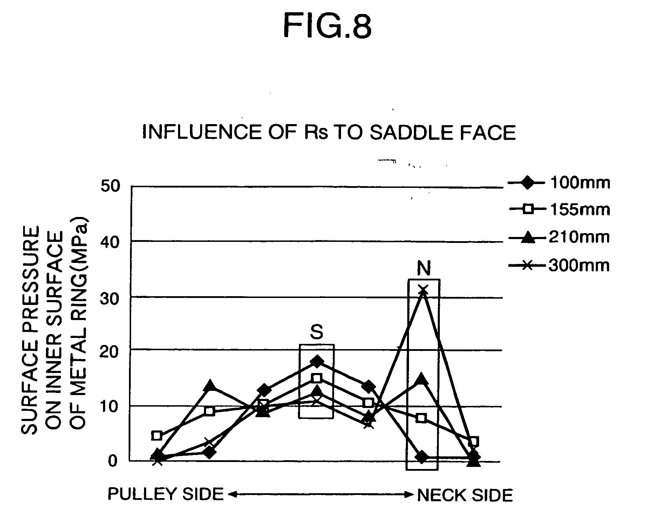

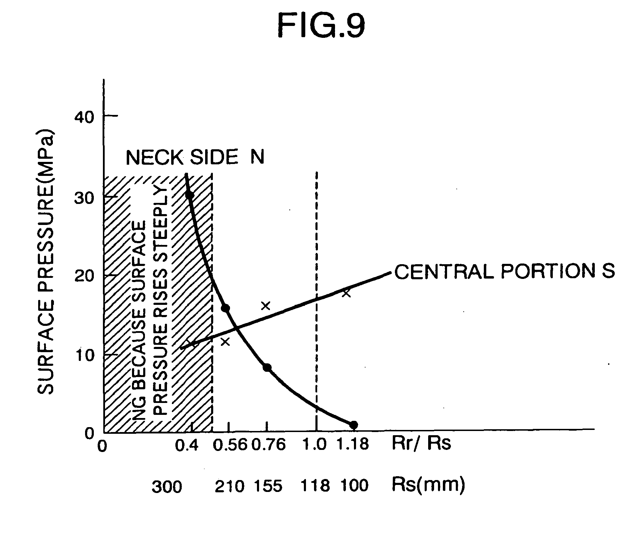

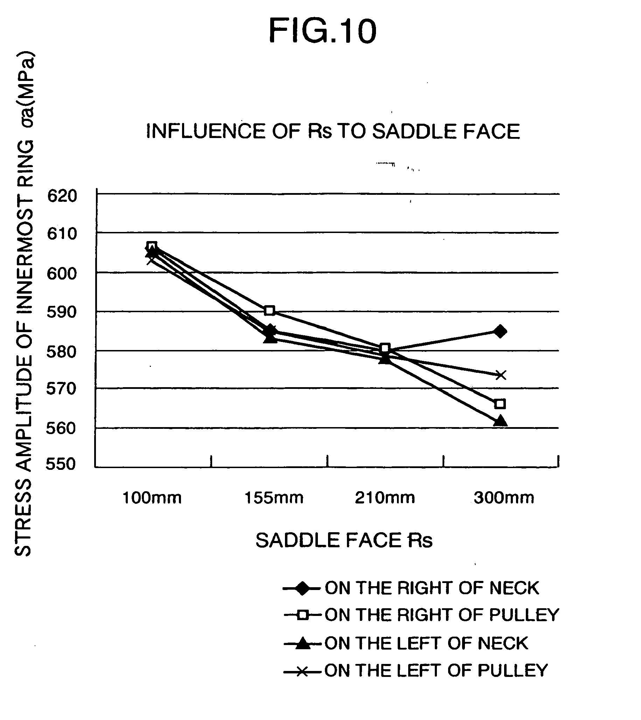

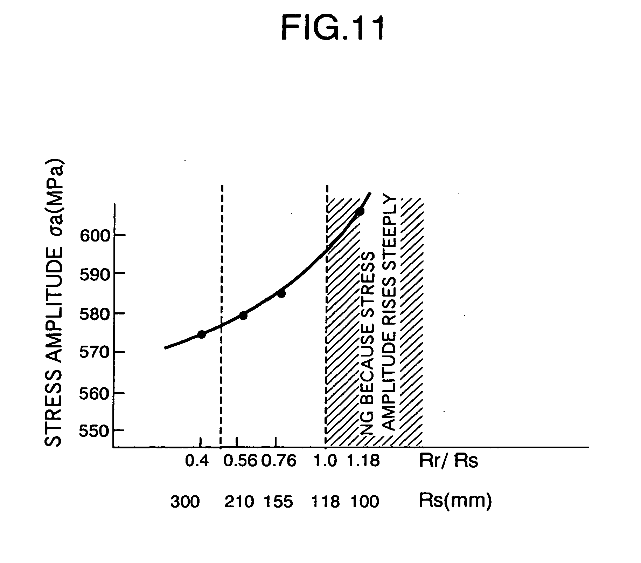

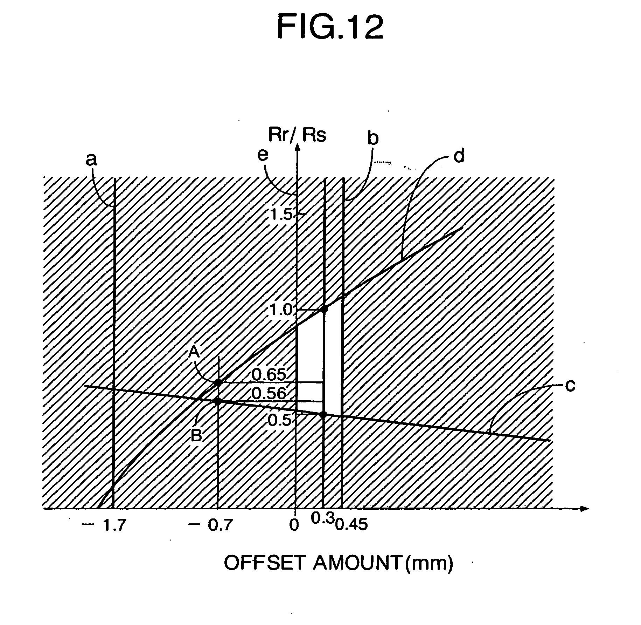

Figs.1 to 12 show an embodiment of the present invention. Fig.1 is a skeleton diagram of a power-transmitting system in a vehicle having a continuously variable transmission mounted therein; Fig. 2 is a partially perspective view of a metal belt; Fig.3 is a front view of a metal element; Fig. 4 is a graph showing the relationship between the distance between an inner end of a metal ring assembly and a neck of the metal element and the offset amount; Fig. 5 is a graph showing the relationship between the maximum surface pressure on an innermost metal ring and the offset amount; Fig.6 is a graph showing the maximum surface pressures on the innermost metal ring, corresponding to various offset amounts; Fig.7 is a graph showing the maximum stresses on the metal ring, corresponding to various offset amounts; Fig. 8 is a graph showing a distribution of widthwise surface pressures on an inner surface of the metal ring, when radius of curvature of a saddle face was varied; Fig. 9 is a graph showing a variation in surface pressure on the inner surface of the metal ring with respect to the ratio Rr/Rs of a radius of curvature of the metal ring assembly to a radius of curvature of the saddle face; Fig.10 is a graph showing a variation in stress amplitude on the innermost metal ring with respect to the radius of curvature of the saddle face; Fig.11 is a graph showing a variation in stress amplitude on the innermost metal ring with respect to the ratio Rr/Rs of the radius of curvature of the metal ring assembly to the radius of curvature of the saddle face; and Fig.12 is a graph showing suitable regions of the ratio Rr/Rs of the radius of curvature of the metal ring assembly to the radius of curvature of the saddle face and the offset amount.

BEST MODE FOR CARRYING OUT THE INVENTION

The mode for carrying out the present invention will now be described by way of an embodiment with reference to the accompanying drawings.

Figs.1 to 12 show an embodiment of the present invention. The definition of forward and backward directions, leftward and rightward directions and radial directions of a metal element used in the embodiment is shown in Fig.2. The radial directions are defined as radial directions of a pulley, against which the metal element abuts. A side closer to a rotational axis of the pulley is a radially inner side, and a side farther from the rotational axis of the pulley is a radially outer side. The leftward and rightward directions are defined as directions along the rotational axis of the pulley, against which the metal element abuts, and the forward and backward directions are defined as directions along a direction of travel of the metal element during forward traveling of a vehicle.

Fig.1 schematically shows the structure of a metal belt-type continuously variable transmission T mounted on an automobile. An input shaft 3 connected to a crankshaft 1 of an engine E through a damper 2 is connected to a driving shaft 5 of the metal belt-type continuously variable transmission T through a starting clutch 4. A driving pulley 6 mounted on the driving shaft 5 includes a stationary pulley half 7 secured to the driving shaft 5, and a movable pulley half 8 which can be moved toward and away from the stationary pulley half 7. The movable pulley half 8 is biased toward the stationary pulley half 7 by a hydraulic pressure applied to an oil chamber 9.

A driven pulley 11 mounted on a driven shaft 10 disposed in parallel to the driving shaft 5 includes a stationary pulley half 12 secured to the driven shaft 10, and a movable pulley half 13 which can be moved toward and away from the stationary pulley half 12. The movable pulley half 13 is biased toward the stationary pulley half 12 by a hydraulic pressure applied to an oil chamber 14. A metal belt 15 comprising a large number of metal elements 32 supported on a pair of left and right metal ring assemblies 31, 31 is wound between the driving pulley 6 and the driven pulley 11 (see Fig.2). Each of the metal ring assemblies 31 comprises twelve metal rings 33 laminated one on another.

A forward driving gear 16 and a backward driving gear 17 are relatively rotatably supported on the driven shaft 10. The forward and backward driving gears 16 and 17 can be coupled selectively to the driven shaft 10 by a selector 18. A forward driven gear 20 meshed with the forward driving gear 16 and a backward driven gear 22 meshed with the backward driving gear 17 through a backward idling gear 21 are secured to an output shaft 19 disposed in parallel to the driven shaft 10.

The rotation of the output shaft 19 is input to a differential gear 25 through a final driving gear 23 and a final driven gear 24 and is transmitted therefrom through left and right axles 26, 26 to driven wheels W, W.

Thus, a driving force of the engine E is transmitted to the driven shaft 10 through the crankshaft 1, the damper 2, the input shaft 3, the starting clutch 4, the driving shaft 5, the driving pulley 6, the metal belt 15 and the driven pulley 11. When a forward travel range is selected, the driving force of the driven shaft 10 is transmitted through the forward driving gear 16 and the forward driven gear 20 to the output shaft 19, thereby allowing the vehicle to travel forwards. When a backward travel range is selected, the driving force of the driven shaft 10 is transmitted through the backward driving gear 17, the backward idling gear 21 and the backward driven gear 22 to the output shaft 19, thereby allowing the vehicle to travel backwards.

At this time, hydraulic pressures applied to the oil chamber 9 in the driving pulley 6 and the oil chamber 14 in the driven pulley 11 of the metal belt-type continuously variable transmission T are controlled by a hydraulic pressure control unit U2 operated by a command from an electronic control unit U1, whereby the gear ratio of the metal belt-type continuously variable transmission T is adjusted continuously. More specifically, if the hydraulic pressure applied to the oil chamber 14 in the driven pulley 11 is increased relative to the hydraulic pressure applied to the oil chamber 9 in the driving pulley 6, the groove width of the driven pulley 11 is decreased, leading to an increased effective radius, and correspondingly, the grove width of the driving pulley 6 is increased, leading to a reduced effective radius. Therefore, the gear ratio of the metal belt-type continuously variable transmission T is varied continuously toward "LOW" (a state of the largest ratio). On the other hand, if the hydraulic pressure applied to the oil chamber 9 in the driving pulley 6 is increased relative to the hydraulic pressure applied to the oil chamber 14 in the driven pulley 11, the groove width of the driving pulley 6 is reduced, leading to an increased effective radius, and correspondingly, the grove width of the driven pulley 11 is increased, leading to a reduced effective radius. Therefore, the gear ratio of the metal belt-type continuously variable transmission T is varied continuously toward "OD" (a state of the smallest ratio).

As shown in Figs.2 and 3, each of the metal elements 32 formed from a metal plate by punching or stamping includes a substantially trapezoidal element body 34, a neck 36 located between a pair of left and right ring slots 35, 35 into which the metal ring assemblies 31, 31 are fitted, and a substantially triangular ear 37 connected to an upper portion of the element body 34 through the neck 36. The element body 34 is formed at its laterally opposite ends with a pair of pulley abutment faces 39, 39 capable of abutting against V-faces 45, 45 of the driving pulley 6 and the driven pulley 11. The metal element 32 is also formed, at its front and rear portions in the travel direction, with main surfaces 40, respectively, which abut against those of the adjacent metal elements 32. An inclined face 42 is formed below the main surface 40 on the front portion in the travel direction with a laterally extending locking edge 41 located therebetween. Further, the ear 37 is formed, at its front and rear surfaces, with a projection 43 and a recess (not shown) capable of being fitted to those of the adjacent ears 37 to interconnect the metal elements 32, 32 adjacent each other in the forward and backward directions. Saddle faces 44, 44 for supporting inner peripheral surfaces of the metal ring assemblies 31, 31 are formed at lower edges of the left and right ring slots 35, 35.

As can be seen from Fig.3, each of the saddle faces 44 is curved into an arcuate shape by crowning, and a radius of curvature provided by the crowning is defined as Rs. The metal ring assembly 31 is also curved into an arcuate shape by crowning, and a radius of curvature of the metal ring assembly in its free state is defined as Rr different from the radius of curvature Rs of the saddle face 44. However, in a state in which the metal elements 32 have been mounted on the metal ring assemblies 31, 31, the inner peripheral surfaces of the metal ring assemblies 31, 31 are in close contact with the saddle faces 44, 44 under the action of a tensile force applied to the metal ring assemblies 31, 31, and the radius Rr of curvature of the metal ring assembly 31 is equal to the radius Rs of curvature of the saddle face 44. In the embodiment, the radius Rs of curvature of the saddle face 44 is set at 155 mm, and the radius Rr of curvature of the metal ring assembly 31 in the free state is set at 118 mm.

In the embodiment, a lateral width of the saddle face 44 is set at 8.3 mm, and a lateral width of the metal ring assembly 31 is set at 9.2 mm, and thus, the width of the metal ring assembly 31 is longer than the width of the saddle face 44 by 9.2 mm - 8.3 mm = 0.9 mm. A peak point $\underline{p}$ of the crowning of the saddle face 44 (the most protruding point) is offset toward a widthwise outer side (a side farther from the center of the metal element 32) by 0.3 mm relative to a widthwise central point $\underline{s}$ of the saddle face 44. As a result, an outer end of the metal ring assembly 31 protrudes outwards from an outer end of the saddle face 44 by (0.9 mm/2) + 0.3 mm = 0.75 mm, and an inner end of the metal ring assembly 31 protrudes inwards from an inner end of the saddle face 44 by (0.9 mm/2) - 0.3 mm = 0.15 mm.

However, even if the outer end of the metal ring assembly 31 is intended to protrude outwards from the outer end of the saddle face 44 by 0.75 mm, the actual amount of protrusion is suppressed to a value smaller than 0.75 mm, because the outer end of the metal ring assembly 31 is brought into contact with the pulley V-face 45 of the driving pulley 6 or the driven pulley 11, whereby the protrusion is inhibited. As a result, the outer end of the metal ring assembly 31 is pushed lightly against the pulley V-face 45, and thus, the metal ring assembly 31 can be positioned in a widthwise direction, whereby the behavior thereof can be stabilized. Moreover, the pulley V-face 45 is finished smoothly, and the force of pushing the metal ring assembly 31 against the pulley V-face 45 is small and hence, an adverse influence cannot be exerted to the durability of the metal ring assembly 31.

On the other hand, provided that the inner end of the metal ring assembly 31 is put into contact with the neck 36 of the metal element 32, a difference in level is generated between adjacent two of the necks 36 of the large number of metal elements 32 laminated one on another and for this reason, there is a possibility that the inner end of the metal ring assembly 31 put into contact with a portion corresponding to the difference in level may be worn, resulting in a degraded durability. In the present embodiment, however, a sufficient distance is ensured between the inner end of the metal ring assembly 31 and the neck 36, whereby such contact is prevented, because the peak point p of the crowning of the saddle face 44 is offset outwards relative to the widthwise central point s of the saddle face 44.

Fig.4 shows a situation wherein a distance D (see Fig.3) between the inner end of the metal ring assembly 31 and the neck 36 is varied in accordance with an offset amount. An offset amount equal to 0.3 mm corresponds to the present embodiment. Each of an offset amount equal to -0.7 mm and an offset amount equal to -1. 7 mm means a case where the peak point p of the crowning of the saddle face 44 is offset inwards (toward the neck 36) relative to the widthwise central point s of the saddle face 44. In the case where the offset amount is equal to 0.3 mm (in the embodiment), the distance D between the inner end of the metal ring assembly 31 and the neck 36 on left and right opposite sides of the metal element 32 is ensured in a range of 1.72 mm to 1. 52 mm and hence, it is not feared that the metal ring assembly 31 and the neck 36 interfere with each other. In the case where the offset amount is equal to -0. 7 mm, the distance D is decreased to 0.47 mm and hence, it is feared that the interference may occur. In the case where the offset amount is equal to -1.7 mm, the distance D assumes a negative value and thus, the interference always occurs. As can be seen from Fig.4, if the offset amount is larger than 0 mm, the metal ring assembly 31 can be put stably into contact with the pulley V-face 45.

Fig.5 shows how the maximum surface pressure Pmax of the innermost metal ring 33 of the metal ring assembly 31 is varied in accordance with the offset amount in an area where the metal belt 15 is wound around the driven pulley 11. As apparent from Fig.5, the maximum surface pressure Pmax of the metal ring 33 in the case where the offset amount is equal to 0.3 mm is lower than that in the case where the offset amount is equal to -0. 7 mm. Further, the maximum surface pressure Pmax in the case where the offset amount is equal to -1.7 mm is lower than that in the case where the offset amount is equal to -0.7 mm.

Fig.6 shows the maximum surface pressures Pmax generated in accordance with the offset amounts and derived from the graph in Fig.5. Namely, it can be seen that when the offset amount is 0.3 mm, the maximum surface pressure Pmax equal to 40 MPa is generated; when the offset amount is -0.7 mm, the maximum surface pressure Pmax equal to 50 MPa is generated; and when the offset amount is -1.7 mm, the maximum surface pressure Pmax equal to 35 MPa is generated.

When the metal belt 15 is wound around the driving pulley 6 and the driven pulley 11 and rotated, a stress corresponding to the addition of a tensile stress due to the tension of the metal belt 15 and a tensile stress (or a compression stress) due to the bending of the metal ring 33 is applied to the metal ring 33 and varied periodically upon every rotation of the metal ring 15.

A graph in Fig. 7 shows the maximum stresses σmax applied to the metal ring 33 with respect to three offset amounts, when the radius Rs of curvature of the saddle face 44 was set at 155mm and the radius Rr of curvature of the metal ring assembly 31 in the free state was set at 118 mm.

As described above, the case where the offset amount is -1.7 mm is not suitable for the practical use, because the metal ring assembly 31 and the neck 36 always interfere with each other. If the remaining cases where the offset amount is -0.7 mm and the offset amount is 0.3 mm (the embodiment) are compared with each other, it can be seen that the maximum stress σmax in the latter case is lower than that in the former case, and the latter case is more excellent in respect of the durability than the former case.

The relationship between the radius Rs of curvature of the saddle face 44 and the radius Rr of curvature of the metal ring assembly 31 in the free state will be considered below.

A graph in Fig. 8 shows widthwise distributions of surface pressure on the inner surface of the metal ring 33, when the radius Rs of curvature of the saddle face 44 was changed to four values: 100 mm, 155 mm (the embodiment), 210 mm and 300 mm, while maintaining the radius Rr of curvature of the metal ring assembly 31 in the free state at a given value of 118 mm.

A graph in Fig.9 shows data at an N-portion (at a neck-side portion) and data at an S-portion (the widthwise central portion) in the graph in Fig.8, which were rewritten with the axis of abscissas taken as Rs (namely, a ratio Rr/Rs when Rr was set at the given value of 118 mm). As apparent from Fig.9, it can be seen that as the ratio Rr/Rs is decreased by increasing the radius Rs of curvature of the saddle face 44, the surface pressure at the widthwise central portion of the metal ring 33 is gradually decreased, but the surface pressure at the neck-side portion of the metal ring 33 is increased steeply. Namely, it can be seen that in a region in which the ratio Rr/Rs is equal to or smaller than 0.5 (a region in which the radius Rs of curvature of the saddle face 44 is equal to or larger than 236 mm), the surface pressure at the neck-side portion is increased steeply, resulting in a degradation in durability of the metal ring assembly 31.

A graph in Fig. 10 shows distributions of stress amplitude σa of the innermost metal ring 33, when the radius Rs of curvature of the saddle face 44 was changed to four values: 100 mm, 155 mm (the embodiment), 210 mm and 300 mm, while maintaining the radius Rr of curvature of the metal ring assembly 31 in the free state at the given value of 118 mm.

A graph in Fig.11 shows average values of the four stress amplitudes σa (left and right neck-side portions and left and right pulley-side portions) in the graph of Fig.10 with the axis of abscissas taken as Rs (namely, the ratio Rr/Rs when Rr was set at the given value of 118 mm). As apparent from Fig.11, it can be seen that as the ratio Rr/Rs is increased by decreasing the radius Rs of curvature of the saddle face 44, the average value of the stress amplitudes σa is gradually increased, but in a region in which the ratio Rr/Rs is equal to or larger than 1.0 (a region in which the radius Rs of curvature of the saddle face 44 is equal to or smaller than 118 mm), the average value of the stress amplitudes σa is increased steeply, resulting in a degradation in durability of the metal ring assembly 31.

A graph in Fig.12 shows the offset amounts on the axis of abscissas and the ratios Rr/Rs on the axis of ordinates, wherein a white region indicates a suitable combination of the offset amount and the ratio Rr/Rs.

A region on the left of a line a indicating an offset amount equal to -1.7 mm is an unsuitable region for the reason that the inner end of the metal ring assembly 31 interferes with the neck 36 of the metal element 32. A region on the right of a line b indicating an offset amount equal to (9.2 - 8.3)/2 = 0.45 mm is an unsuitable region for the reason that the outer end of the metal ring assembly 31 contacts too strongly with the pulley V-face 45.

A line c is made by plotting the ratios Rr/Rs in an unsuitable region in Fig.9 corresponding to the offset amount of 0.3 mm, namely, permitting the surface pressure at the neck-side portion of the metal ring assembly 31 to rise steeply, with respect to various offset amounts. A region below the line c is an unsuitable region for the reason that the surface pressure at the neck-side portion of the metal ring assembly 31 rises steeply. At an intersection of the line c with the offset amount of 0.3 mm, the ratio Rr/Rs is equal to 0.5. The line c is determined by the relationship between the Figs.6 and 9.

The description of a point B in Fig.12 is as follows: As shown in Fig.6, when the offset amount is 0.3 mm → -0.7 mm, the maximum surface pressure is increased by 25 % (40 MPa → 50 MPa), and to cancel such increment by the ratio Rr/Rs, it is necessary to increase a limit value of 0.5 to 0.56 (20 MPa 15 MPa), as shown in Fig.9.

A line d is made by plotting the ratios Rr/Rs in the unsuitable region in Fig.11 corresponding to the offset amount of 0.3 mm, namely, permitting the widthwise average value of the stresses in the metal ring 33 to rise steeply, with respect to various offset amounts. A region above the line d is an unsuitable region for the reason that the widthwise average value of the stresses in the metal ring 33 rises steeply. At an intersection of the line d with the offset amount of 0.3 mm, the ratio Rr/Rs is equal to 1.0. The line d is determined by the relationship between Figs.7 and 11.

The description of a point A in Fig.12 is as follows: As shown in Fig.7, when the offset amount is 0.3 mm → -0.7 mm, the maximum stress is increased by 2.5 % (720 MPa → 738 MPa), and to cancel such increment by the ratio Rr/Rs, it is necessary to decrease a limit value of 1.0 to 0.65 (595 MPa → 580 MPa), as shown in Fig.11.

A line e is a border line from Fig.4 for whether or not the end of the metal ring assembly 31 is biased to the pulley V-face 45. The offset amount equal to or smaller than 0 mm at which the end of the metal ring assembly 31 cannot contact with the pulley V-face 45 at all is unsuitable, because the behavior of the metal ring assembly 31 is unstable.

Namely, in a region surrounded by the lines e, b, d and c, the centering of the metal ring assembly 31 is conducted appropriately. Therefore, the wearing of the end of the metal ring assembly 31 does not occur, and the surface pressure on the inner surface of the innermost metal ring 33 can be suppressed to a low level, whereby the wearing can be suppressed and moreover , the stress on the innermost metal ring 33 can be suppressed to a low level. As a result, the sufficient durability of the metal belt 15 can be ensured.

Although the embodiment of the present invention has been described in detail, it will be understood that various modifications in design may be made without departing from the subject matter of the invention.

For example, the values of the radius Rs of curvature of the saddle face 44, the radius Rr of curvature of the metal ring assembly 31 and the offset amount are not limited to those in the embodiment and may be changed within the limits of the scope of protection of claim 1.

**Claims**

1. A metal belt for a continuously variable transmission, which comprises a metal ring assembly (31) comprising a plurality of endless metal rings (33) laminated one on another, and a large number of metal elements (32) each having a saddle face (44) formed by a crowning in a ring slot (35) into which said metal ring assembly (31) is fitted, said metal belt being wound around a driving pulley (6) and a driven pulley (11) to transmit a driving force, wherein the position of a peak point (p) of said crowning is offset outwards in a widthwise direction from a widthwise central position (s) on the saddle face (44),

**characterized in that** the width of the metal ring assembly (31) is longer than the width of the saddle face (44); and that said offset amount is equal to or smaller than half of a value provided by the subtraction of the width of the saddle face (44) from the width of the metal ring assembly (31), such that a widthwise outer end of the metal ring assembly (31) is pushed lightly against a pulley V-face (45).

2.  A metal belt for a continuously variable transmission according to claim 1, wherein the value of a ratio (Rr/Rs) of a radius (Rr) of curvature of the crowning of the metal ring assembly (31) in a free state to a radius (Rs) of curvature of the crowning of the saddle face (44) of the metal element (32) is in a range of 0.5 to 1.0.

**Patentansprüche**

1.  Metallriemen für ein stufenlos verstellbares Getriebe, der eine Metallringanordnung (31), die eine Mehrzahl von aufeinander gelegten endlosen Metallringen (33) aufweist, und eine große Anzahl von Metallelementen (32) aufweist, die jeweils eine Sattelfläche (44) aufweisen, die durch eine Ballung in einem Ringschlitz (35) gebildet ist, in die die Metallringanordnung (31) eingesetzt ist, wobei der Metallriemen um eine Antriebsriemenscheibe (6) und eine Abtriebsriemenscheibe (11) herumgelegt ist, um eine Antriebskraft zu übertragen,
    worin die Position eines Spitzenpunkts (p) der Ballung in Breitenrichtung von einer breitenmäßig mittleren Position (s) an der Sattelfläche (44) auswärts versetzt ist,
    **dadurch gekennzeichnet, dass** die Breite der Metallringanordnung (31) länger ist als die Breite der Sattelfläche (44); und dass der Versatzbetrag gleich oder kleiner als die Hälfte eines Werts ist, der durch die Subtraktion der Breite der Sattelfläche (44) von der Breite der Metallringanordnung (31) vorgesehen wird, so dass ein breitenmäßiges Außenende der Metallringanordnung (31) leicht gegen eine Riemenscheibenkeilfläche (45) gedrückt wird.

2.  Metallriemen für ein stufenlos verstellbares Getriebe nach Anspruch 1, worin der Wert eines Verhältnisses (Rr/Rs) eines Krümmungsradius (Rr) der Ballung der Metallringanordnung (31) im freien Zustand zu einem Krümmungsradius (Rs) der Ballung der Sattelfläche (44) des Metallelements (32) im Bereich von 0,5 bis 1,0 liegt.

**Revendications**

1.  Courroie métallique pour une transmission à variation continue de la vitesse, comprenant un ensemble d'anneaux métalliques (31) comprenant une pluralité d'anneaux métalliques sans fin (33) laminés l'un sur l'autre, et un grand nombre d'éléments métalliques (32) ayant chacun une face en forme de selle (44) formée par un bombement dans une encoche annulaire (35) dans laquelle ledit ensemble d'anneaux métalliques (31) est fixé, ladite courroie métallique étant enroulée autour d'une poulie d'entraînement (6) et d'une poulie entraînée (11) pour transmettre une force d'entraînement, dans laquelle la position d'un sommet (p) dudit bombement est décalée vers l'extérieur dans une direction latérale depuis une position centrale en largeur (s) sur la face en forme de selle (44),
    **caractérisée en ce que** la largeur de l'ensemble d'anneaux métalliques (31) est plus grande que la largeur de la face en forme de selle (44); et **en ce que** ladite quantité de décalage est égale ou inférieure à la moitié d'une valeur fournie par la soustraction de la largeur de la face en forme de selle (44) à la largeur de l'ensemble d'anneaux métalliques (31), de telle façon qu'une extrémité latérale extérieure de l'ensemble d'anneaux métalliques (31) est poussée légèrement contre une face en V de la poulie (45).

2.  Courroie métallique pour une transmission à variation continue de la vitesse suivant la revendication 1, dans laquelle la valeur d'un rapport (Rr/Rs) d'un rayon de courbure (Rr) du bombement de l'ensemble d'anneaux métalliques (31) dans un état libre sur un rayon de courbure (Rs) du bombement de la face en forme de selle (44) de l'élément métallique (32) est dans une plage de 0,5 à 1,0.

# FIG.1

# FIG.2

RADIALLY OUTWARDS

BACKWARDS

RIGHTWARDS ← → LEFTWARDS

FORWARDS

RADIALLY INWARDS

15

DIRECTION OF TRAVEL

31

43

37

31

33

33

40

44

41 42 36 35

34 35

39

32

FIG.3

# FIG.4

DISTANCE BETWEEN INNER END OF RING AND NECK

OFFSET AMOUNT

# FIG.5

MAXIMUM SURFACE PRESSURE Pmax

—▲— offset −1.7mm
—■— offset −0.7mm
—◆— offset 0.3mm

# FIG.6

OFFSET AMOUNT(mm)

# FIG.7

MAXIMUM STRESS σmax

# FIG.8

## INFLUENCE OF Rs TO SADDLE FACE

# FIG.9

# FIG.10

INFLUENCE OF Rs TO SADDLE FACE

STRESS AMPLITUDE OF INNERMOST RING σa(MPa)

620
610
600
590
580
570
560
550

100mm    155mm    210mm    300mm

SADDLE FACE Rs

—♦— ON THE RIGHT OF NECK
—□— ON THE RIGHT OF PULLEY
—▲— ON THE LEFT OF NECK
—✕— ON THE LEFT OF PULLEY

# FIG.11

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000513Y209 B
- JP 2000297848 A
- JP 2001214956 A